# EUROPÄISCHE PATENTANMELDUNG

(11) **EP 2 138 339 A1**
(43) Veröffentlichungstag der Anmeldung: **30.12.2009**
(21) Anmeldenummer: 08011569.4
(22) Anmeldetag: 26.06.2008
(51) Int. Cl.: B60J 7/057

(54) **Verfahren und Anordnung zur Störgeräuschminderung**

(71) Anmelder: Langen, Paul, 51062 Köln (DE); Güld, Thomas, 53881 Euskirchen (DE)
(72) Erfinder: Langen, Paul, 51062 Köln (DE); Güld, Thomas, 53881 Euskirchen (DE)

(57) **Zusammenfassung**

Es wird ein Verfahren zur Störgeräuschminderung (und eine Anordnung zur Durchführung des Verfahrens) beschrieben, das eingesetzt wird an mindestens einer einer aerodynamischen Anströmung ausgesetzten Öffnung, die mit mindestens einem Verschlusselement und/oder mit mindestens einem bewegbaren Strömungsleitelement ausgestattet ist. Das Auftreten von Störgeräuschen M1 wird ermittelt und das Verschlusselement und/oder das Strömungsleitelement wird mit der Tendenz angesteuert, erzeugte Schwingungen P unter eine vorgebbare Schwelle T der Lautstärke abzusenken. Es wird vorgeschlagen, die erzeugten Schwingungen P einer Spektralanalyse FFT zu unterwerfen zur Ermittlung von durch die Anströmung ausgelösten Schwingungen und bei Auftreten mindestens einer Schwingung P wird ein Ansteuersignal S für die Betätigung des Verschlusselements und/oder des Strömungsleitelements ausgegeben.

## Beschreibung

Die Erfindung bezieht sich auf ein Verfahren und auf eine Anordnung zur Störgeräuschminderung an einer Öffnung, die einer aerodynamischen Anströmung ausgesetzt ist. Die Öffnung kann mit einem Verschlusselement und/oder mindestens einem Strömungsleitelement ausgestattet sein. Die Störgeräuschunterdrückung wird durch Ansteuerung des Verschlusselements oder des Strömungsleitelements vorgenommen, wobei die Störgeräusche akustisch erfasst und ausgewertet werden.

Bei Fahrzeugen mit verschließbarer Fahrzeugdachöffnung wird in der Fahrt mit geöffnetem Dach der Fahrtwind in den Fahrgastraum geleitet. Es zeigt sich, dass bei bestimmten Geschwindigkeiten in Bezug zur Größe der Dachöffnung niederfrequente Druckschwankungen im Fahrgastraum auftreten, die auch als "Wummern" bezeichnet werden und besonders störend empfunden werden.

Aus subjektiven Beobachtungen bei Fahrten in Fahrzeugen weiß man, dass bei einer Fahrt mit geöffnetem Schiebedach in einem gewissen Geschwindigkeitsbereich die Störgeräusche die Grenze zur Unerträglichkeit übersteigen. In eigenen Windkanaluntersuchungen konnten diese Beobachtungen objektiviert werden. Bei einem sonst strömungstechnisch optimierten Fahrzeug wurde festgestellt, dass bei den beobachteten Geschwindigkeiten ein offenes Schiebedach die Lautstärke so stark wird, dass sie auf mehr als 100 dBA ansteigt. Eine Gefährdung der Gesundheit der Insassen kann dabei nicht ausgeschlossen werden. Bei solchen Störgeräuschen müsste von langen, schnellen Fahrten mit geöffnetem Schiebedach dringend abgeraten werden.

Ein Verfahren unter Ausnutzung des psychoakustischen Verdeckungseffekts wird in der EP 1 202 875 B 1 vorgeschlagen, um Aggregate des Fahrzeugs so anzusteuern, dass von ihnen ausgehende Störgeräusche nicht als störend empfunden werden, bzw. nicht mehr wahrnehmbar sind. Der Pegel oder die Schallintensität der Störgeräusche wird herangezogen und breitbandig korreliert, wonach anschließend die aus der Psychoakustik bekannten Prinzipien der Verdeckungsmechanismen eingesetzt werden.

Es gibt noch weitere Vorschlägen zu Minderung oder Vermeidung der Wummer-Geräusche.

So ist eine Vorrichtung bekannt (DE 10160943 A1), um Druckschwankungen im Fahrgastraum bei der Fahrt mit geöffnetem Dach und mit am Dach angeordnetem Windabweiser zu reduzieren oder zu vermeiden. Hierbei werden die Druckschwankungen von einem Drucksensor erfasst, der mit einer Ansteuerung für einen Motor am Windabweiser verbunden ist. Aufgrund der Sensorsignale wird die Lage des Windabweisers ermittelt und dann so eingestellt, bis die Druckschwankungen minimiert sind.

Im Zusammenhang mit der vorzulegenden Erfindung ist eine Vorrichtung zur Unterdrückung von niederfrequenten Störgeräuschen in Kraftfahrzeugen zu erwähnen (DE 19633188 C1), wobei mit einem Mikrofon Wummer-Geräusche erfasst werden und als Steuergröße für ein Verkleinern eines Fensters im Fahrzeug verwendet wird.

Der Nachteil der vorgenannten Vorrichtungen liegt darin, dass die Druckschwankungen nur global ermittelt werden, was zu ungenauen Messergebnissen und gegenläufigen Steuereffekten fühlt. Weiterhin kann eine Trennung von aerodynamisch bedingten Geräuschen und anderen Nebengeräuschen nicht vorgenommen werden.

Die Erfindung hat die Aufgabe, ein verbessertes Verfahren und eine zugehörige Anordnung anzugeben, welche gezielt von der aerodynamischen Anströmung herrührende Schwingungen ermittelt und diese ausnutzt, niederfrequente Störgeräusche zu mindern oder sogar auszuschalten.

Die Lösung der Aufgabe findet sich in den formulierten nebengeordneten Ansprüchen, vorteilhafte Ausgestaltungen sind in den zugehörigen Unteransprüchen dargestellt.

Der Kern der Erfindung besteht darin, dass Geräusche, insbesondere Resonanzschwingungen an aerodynamisch angeströmten verschließbaren Öffnungen gezielt mittels Sensorik erfasst werden, dass das Geräuschspektrum zur Ermittlung starker störender Schwingungen verarbeitet wird und die starke Grundschwingung der Störgeräusche zur Ausgabe eines Ansteuersignals für Verschlusselemente oder Strömleitelemente herangezogen wird. Der Geräuschpegel der Störgeräusche wird einer akustischen Spektralanalyse unterworfen zur Ermittlung von Resonanz- oder Grundschwingungen, und bei Auftreten der stärksten Schwingungsfrequenz wird ein Ansteuersignal für die Betätigung des Verschlusselements und/oder des Strömungsleitelements ausgegeben. Vorzugsweise soll die Spektralanalyse mittels Fast-Fourier-Transformation vorgenommen werden.

Die Erfindung soll vorzugsweise in einem schmalbandigen Spektralbereich (Frequenzbandbreite) eingesetzt werden. Insbesondere wird ein niederfrequenter Spektralbereich (etwa unterhalb 100 Hz) der Geräuschanalyse unterworfen, weil besonders dort das störende Wummern auftritt und unterdrückt werden soll.

Die aerodynamisch bedingten Störgeräusche werden durch ein geeignetes Messmikrofon aufgenommen, wobei vorzugsweise die Aufnahmecharakteristik oder die weitere Signalverarbeitung durch Bandpassfilterung beschränkt wird. Das vom Messmikrofon aufgenommene Störgeräusch wird einer Spektralanalyse - vorzugsweise einer Fast-Fourier-Transformation (FFT) - unterworfen und die Frequenzen der stärksten Resonanz- oder Grundschwingungen ermittelt. FFT ist ein Algorithmus zur schnellen Berechnung der Werte einer diskreten Fourier-Transformation. Die Beschleunigung des Rechenvorgangs gegenüber der direkten Berechnung beruht auf der Vermeidung mehrfacher Berechnung sich gegenseitig aufhebender Terme. Der Algorithmus wird James W. Cooley und John W. Tukey zugeschrieben, die ihn 1965 veröffentlichten.

Die elektronische Signalverarbeitung geschieht in einem Signalprozessor, welcher auch Teil der elektronischen Ausrüstung des Fahrzeugs sein kann. Von der elektronischen Signalverarbeitung wird ein Ansteuersignal für elektromotorisch angetriebene Verschlusselemente (Schiebedach, Fensterheber) oder Strömungsleitelemente (z.B. Windabweiser, Spoiler) ausgegeben. Hierdurch kann über eine Steuerelektronik die Größe der Fensteröffnung (Verschlussmechanik eines Fensterhebers oder Schiebedachs) oder die Position (vorzugsweise der Anstellwinkel) des Strömungsleitelements verändert werden. Die Ansteuersignale können unmittelbar direkt oder über ein elektronisches Bussystem an die elektromotorischen Antriebe übermittelt werden. Es gibt verschiedene Buskonzepte (z.B. in Fahrzeugen CAN, MOST, LIN), die dem Fachmann bekannt sind. Die Anbindung der vorgeschlagenen elektronischen Signalverarbeitung an ein bestimmtes Buskonzept und die detaillierte Programmierung des Controllers ist daher in der Regel immer möglich. Einzelheiten hierfür müssen dazu hier nicht näher dargestellt werden.

Der vom Mikrofon eingespeiste Frequenzgang (Störgeräusch) kann zusätzlich einem akustischen Komprimierverfahren unterworfen werden, was einer Vereinfachung und/oder Beschleunigung der Signalverarbeitung entspricht. Als Komprimierverfahren könnte beispielsweise das MP3-Verfahren eingesetzt werden.

Neben der Auswertung und Spektralanalyse der aerodynamisch bedingten Störgeräusche können auch andere akustische Geräuschquellen in die Auswertung und Verwertung einbezogen werden. Die aerodynamisch bedingten Störgeräusche und die Geräusche anderer akustischer Geräuschquellen sollen dabei einer Auswerteschaltung zugeführt werden, die eine Trennung der beiden Geräusche vornimmt, so dass allein aus dem aerodynamisch bedingten Störgeräusch die Grundschwingungen herausgezogen und verwendet werden. Dies wird im weiteren noch näher erläutert.

Die Erfindung kann in Fahrzeugen (zu Land, zu Wasser oder in der Luft) oder in stationären Räumlichkeiten, die einer starken und störenden aerodynamischen Wind- oder Strömungsbelastung ausgesetzt sind, eingesetzt werden. Im folgenden soll die Erfindung speziell für den Einsatz in Fahrzeugen (vorzugsweise in Automobilen) dargestellt werden, was nicht heißt, dass durch die speziell auf Fahrzeuge abgehobene Beschreibung eine Beschränkung der schutzrechtlichen Ansprüche auf Fahrzeuge vorgenommen wird. Dem Fachmann dürfte es nicht schwerfallen, die anderen vorgenannten Einsatzgebiete immer mitzubetrachten und die Erfindung entsprechend auch auf nicht fahrzeuggebundene Gebiete zu übertragen.

Im folgenden soll daher die Erfindung nur beim Einsatz in Automobilen beschrieben werden.

Wie zuvor erwähnt, entsteht bei einem Automobil mit offenem Schiebedach ab einer gewissen Fahrgeschwindigkeit (meistens oberhalb von 40 km/h) das typische und störende Wummern. In eigenen Untersuchungen von Automobilen im Windkanal konnte ermittelt werden, dass es sich um stabile Resonanzerscheinungen der am Schiebedach erzeugten Wirbel handelt. Die auftretenden Störungen sind als Resonanzschwingungen zu verstehen, die in dem hinter der Anströmöffnung liegenden Innenraum (bei einem Fahrzeug, in der Fahrzeugkabine) erzeugt werden. Der hohle Innenraum wirkt wie ein Helmholtz-Resonator, in dem eine starke Resonanzschwingung (Grundschwingung) und mehr oder weniger starke Oberschwingungen angeregt werden. Bei Unterdrückung der Grundschwingung, verschwinden die Oberschwingungen ebenso.

Die störenden Resonanzen haben in Abhängigkeit von der Fahrgeschwindigkeit eine nahezu frequenzfeste Schwingung bei Frequenzen im Bereich unterhalb von 50 Hz, bei bestimmten Fahrzeugen im Bereich von 15 bis 30 Hz. Bei verschiedenen Fahrzeugtypen wird beobachtet, dass die Grundschwingung, zumindest in einem relativ großen Fahrgeschwindigkeitsbereich nahezu geschwindigkeitsunabhängig ist. Allenfalls kann eine leichte Zunahme mit zunehmender Anströmgeschwindigkeit festgestellt werden. Weiterhin treten störende Schwingungen im höheren Frequenzbereich (Pfeifgeräusche) auf, die von nur mit Schlitzweite geöffneten Fenstern herrühren. Die Erstreckung der Spektralanalyse auf höhere Frequenzen erlaubt die Erfassung auch solcher Geräusche.

In den Windkanaluntersuchungen konnte bestätigt werden, dass ein Zufahren des Schiebedaches um einige wenige Prozent der Öffnungsweite (etwa ca. 1 bis 3 cm) schon ausreicht, um die entstehenden Luftwirbel unschädlich zu machen.

Ein Drucksensor (Mikrofon) zur Erfassung des Geräuschspegels kann im Innenraum oder in der Nähe der Öffnung auch außerhalb des Innenraums angeordnet sein, wobei nur darauf zu achten ist, dass die typischen Wummer-Geräusche vom Drucksensor ausreichend genau erfasst werden. Die Pegel der Grundschwingungen sind an den Orten nicht unbedingt identisch mit denen im Fahrgastraum, doch ist dies für das Verfahren nicht entscheidend, da es im wesentlichen auf eine Reduzierung der Grundschwingung ankommt und nicht auf den Pegel des Störgeräuschs.

Das Verfahren der Geräuschpegelerfassung, der signaltechnischen Verarbeitung und der Ansteuerung der elektromotorischen Antriebe kann automatisch über die Bordelektronik und/oder einen Automotive-Bus ablaufen.

Das erfindungsgemäße Verfahren kann als Regelkreis ausgelegt sein, wobei als Regelgröße die Weite einer Öffnung und/oder die Stellung eines Windabweisers und als Störgröße der Pegel der Resonanzschwingung eingesetzt werden. Das bedeutet, dass bei Abnahme der störenden akustischen Grundschwingung, was in der Regel durch Verringerung der Anströmgeschwindigkeit passiert, die Öffnung automatisch wieder vergrößert und/oder der Windabweiser wieder zurückgestellt wird. Durch diese direkte Verknüpfung der Lage des Windabweisers und/oder der Öffnungsweite des Schiebdachs (des Fensters) mit den Druckverhältnissen im Fahrgastraum lässt sich stets eine optimale Lage von Windabweiser und/oder Schiebdach, bzw. Fenster ermitteln und einstellen.

Zur Vermeidung von Störeinflüssen von bordseitig vorhandenen und tönenden Schallquellen wird das elektronische - nicht das akustische - Ausgangssignal einer Schallquelle (z.B. von im Fahrzeug vorhandene Lautsprecher) erfasst und an einen zweiten, parallelen Eingang des Operationsverstärkers aufgeschaltet. Die an den beiden Eingängen vorliegenden akustischen Signale werden elektronisch subtrahiert und das Ergebnis wie vorbeschrieben der Spektralanalyse unterworfen. Das Verfahren stellt sicher, dass tiefe Frequenzen der bordseitigen Schallquelle(n) nicht in die Ermittlung und Auswertung des niederfrequenten Spektrums eingehen.

Zusätzlich kann die Überwachung der Anströmgeschwindigkeit in das Verfahren mit eingebunden werden. Für die Anwendung der Erfindung bei stationären Räumlichkeiten muss dazu ein Windmesser hinzugenommen werden. Für den Einsatz in Fahrzeugen kann die Fahrzeuggeschwindigkeit aus dem Tachosignal abgeleitet werden.

Im Fahrzeugbetrieb bleibt es nicht aus, dass die Fahrzeuggeschwindigkeit kurzzeitig in kleinem Maßstab variiert. Um zu vermeiden, dass bei auftretenden Resonanzen und bei gering variierenden Anströmgeschwindigkeiten Fenster oder Windabweiser ständig bewegt werden, kann die digitale Signalverarbeitung derart eingestellt und programmiert werden, dass innerhalb eines gewissen Geschwindigkeitsintervalls (beispielsweise +/- 5 oder 10 km/h) nach Unterdrückung der störenden Schwingung eine Änderung der Öffnungsweite nicht erfolgt.

Das Ansteuersignal kann vorzugsweise auch in eine Anzeige (z.B. optisch, als Leuchtdiode) umgesetzt werden, wodurch dem Fahrzeugführer das Vorhandensein eines Störgeräuschpegels signalisiert wird.

Dies kann dann nützlich sein, wenn das erfindungsgemäße Verfahren vorher bewusst ausgeschaltet wurde, so dass die optische Anzeige an die Wiederinbetriebnahme erinnert.

Vorzugsweise kann die Einstellung einer Klima- oder Heizanlage in das erfindungsgemäße Verfahren einbezogen werden. Aus dem Zusammenspiel von Fensteröffnung und Klimatisierung bestimmt sich die Zufuhr von Luft in den Fahrgastraum und die Höhe der herrschenden Temperatur. Die akustische Eigenschaft des schwingungsfähigen Innenraums wird von diesen Parametern bestimmt. Um zu vermeiden, dass zwar das Störgeräusch (Wummern oder Pfeifen) unterbunden wird, sich aber gleichzeitig Verhältnisse einstellen, die für den Fahrer unangenehm sind, z.B. eine zu hohe Luftzufuhr oder eine zu starke Abkühlung der Luft im Fahrgastraum, können dem Regelkreis zur Minimierung der störenden Druckschwankungen weitere Regelkreise zur Optimierung des Luftdurchsatzes und/oder der Innenraumtemperatur überlagert sein.

Um die elektronische Signalverarbeitung zu beschleunigen oder zu vereinfachen, kann vorgesehen werden, Stellungen des Windabweisers oder des Schiebedachs, bzw. Fensters in Bezug auf die Parameter, die den Fahrzeugzustand beschreiben, abzuspeichern und die so gewonnenen Datensätze als Bibliothek zur Verfügung zu stellen. Die Werte müssen lediglich aus einem Datenspeicher ausgelesen werden, wenn im Fahrbetrieb dieselben akustischen und/oder klimatischen Parameter festgestellt werden, da optimale Werte für die Einstellung des Schiebedachs und/oder des Windabweisers in der Bibliothek abgelegt sind. Das erfindungsgemäße System kann somit vorzugsweise auch selbstlernend ausgestaltet sein.

Bei serienmäßig in großer Stückzahl hergestellten Fahrzeugen bietet es sich an, die Akustik des Fahrzeuginnenraums, beispielsweise im Windkanal auszumessen und die Akustik in Beziehung zur Fahrzeug- oder Anströmgeschwindigkeit und zur Öffnungsweite der Dach- und Fensteröffnungen zu setzen. Hierdurch kann ein akustisches, elektronisch speicherbares Fahrzeugparametermodell hergestellt werden, welches in der Bordelektronik digital abgelegt wird. Mit einer solchen Maßnahme erübrigt sich die online-Erfassung des Geräuschspegels, weil mit dem hinterlegten akustischen Fahrzeugmodell Windabweiser und/oder Fensterheber in Abhängigkeit der Fahrzeuggeschwindigkeit derart angesteuert werden können, dass Störsituationen durch Wummern oder Pfeifen gar nicht erst auftreten.

Es wird mindestens eine Anordnung zur Durchführung eines Verfahrens vorgeschlagen, deren Einzelheiten kurz beschrieben werden. Die Merkmale der Anordnung können einzeln oder in Kombination miteinander verwirklicht sein.

Zur Erfassung der durch die Anströmung ausgelösten Schwingungen ist ein Drucksensor (Mikrofon) vorhanden, dessen Ausgangssignal einer elektronischen Verarbeitungskette zugeführt wird. Der Frequenzgang der von der Anströmung ausgelösten Schwingungen wird elektronisch einer Spektralanalyse, vorzugsweise nach dem Fast-Fourier-Transformationsverfahren (FFT) unterworfen. Es wird ein Ansteuersignal für die Betätigung mindestens eines Verschlusselements und/oder mindestens eines Strömungsleitelements gebildet, wenn mindestens eine über einer vorgebbaren Schwelle liegende Spektrallinie (Wummerresonanzlinie) ermittelt ist.

Die Verarbeitung des Frequenzgangs kann zur Beschleunigung der Verarbeitung vor der Fast-Fourier-Transformation einer schmalbandigen Trackinganalyse unterworfen werden.

Das Ansteuersignal soll über einen elektronischen Bus ausgebar sein.

Der Eingang der elektronischen Verarbeitungskette kann als Subtrahierer ausgebildet sein, auf dessen ersten Eingang das Ausgangssignal des Drucksensors und auf dessen zweiten Eingang ein elektronisches Ausgangssignal einer im Inneren vorhandenen Schallquelle (Lautsprecher eines Entertainmentsystems) gefiihrt ist und das elektronische Ausgangssignal der internen Schallquelle vom Ausgangssignal des Drucksensors subtrahiert wird.

Es kann eine, vorzugsweise optische Anzeige vorhanden sein, die vom Ansteuersignal beaufschlagt wird.

Um die Fahrzeugakustik möglichst vollständig zu erfassen, kann weiterhin und ergänzend der Öffnungszustand des Schiebedaches, die Fahrgeschwindigkeit, der Öffnungsgrad von weiteren Fenstern oder Türen im Fahrzeug ermittelt, sowie die Einstellung der Klimaanlage berücksichtigt und in die motorische Ansteuerung eingebracht werden. Außerdem können Fahrereingaben berücksichtigt werden, die die Wünsche hinsichtlich der Luftbewegung im Fahrgastraum und die dort herrschende Temperatur betreffen.

Aus dem Öffnungszustand des Schiebedaches, der Fensterheber und/oder der Position des Windabweisers und der Fahrgeschwindigkeit kann unter Berücksichtigung eines Fahrzeugmodells die Position des Strömungsleitelements (Anstellwinkel) und/oder die Weite der Fensteröffnung ermittelt werden. Dabei werden ggf. noch weitere Messgrößen, wie Temperaturen und Luftdurchsatz im Fahrgastraum, einbezogen. Eine Korrektur der Position des Strömungsleitelements oder der Weite der Fensteröffnung erfolgt über die zusätzlichen Fahrzeugzustandsdaten. Des weiteren ist vorgesehen, dass der Fahrer auch unmittelbar Einfluss nehmen kann auf die Strömungsverhältnisse an der Öffnung, um eine als nicht optimal empfundene Einstellung im eigenen Sinn zu beeinflussen. In letzteren Fall ist es angezeigt, das erfindungsgemäße Verfahren, bzw. die Anordnung von automatischem Betrieb auf manuellen Betrieb umschaltbar zu gestalten.

In Neufahrzeugen ist eine Implementierung der erfindungsgemäßen Technologie einfach zu realisieren. Die Zusatzkosten fallen relativ gering aus.

Das hier erarbeitete Konzept kann in bereits bestehenden Fahrzeugen nachgerüstet werden, wobei vorausgesetzt wird, dass elektromotorisch angetriebene Schiebedächer oder Fensterheber vorhanden sind.

Das erfindungsgemäße Verfahren stellt eine erhebliche Verminderung des Geräuschpegels in Fahrzeugen dar. Zusätzlich wird ein positiver Effekt auf die Fahrsicherheit erreicht.

Wie schon erwähnt, kann die Erfindung bei aerodynamisch angeströmten Öffnungen (Fenstern, Schiebedächer, Seitenfenstern) von Land-, Luft- oder Wasserfahrzeugen oder in Gebäuden in windanfälligen Regionen eingesetzt werden.

Um die Erfindung weiter zu erläutern, wird ein Ausführungsbeispiel in den Figuren dargestellt. Diese zeigen im Einzelnen:
Fig. 1: Lautstärke in Abhängigkeit von der Anströmgeschwindigkeit,
Fig. 2: Amplitude einer aus Spektralanalyse ermittelten starken Schwingung,
Fig. 3: Amplitude einer Resonanzlinie in Abhängigkeit von der Anströmgeschwindigkeit,
Fig. 4: allgemeines Schema der Signalverarbeitung und
Fig. 5: ein Analysemodul.

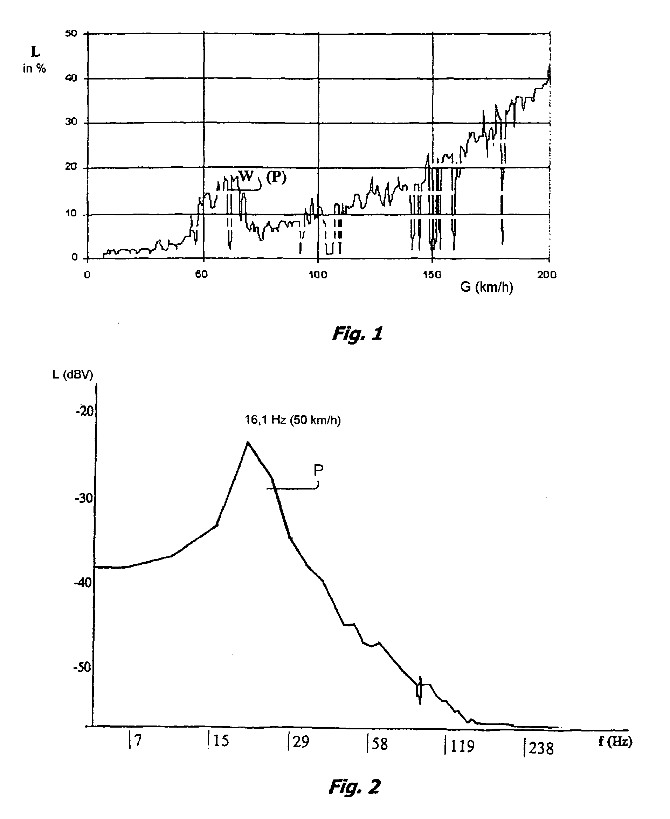

Die in den Figuren 1 und 2 dargestellten Diagramme stammen aus Messreihen mit einem PKW im Windkanal (Audi A4 Avant Combi). Es handelt sich um typische Messergebnisse, die ähnlich und vergleichbar auch bei anderen PKWs gewonnen werden konnten.

Die Fig. 1 zeigt die gemessene Lautstärke L in der Fahrzeugkabine eines PKWs mit offenem Schiebedach in Abhängigkeit von der Anströmgeschwindigkeit. Die Anströmgeschwindigkeit muss nicht notwendig die Fahrtgeschwindigkeit eines Fahrzeuges bedeuten, da äußere Windeinflüsse (Gegenwind, Rückenwind) auftreten können. Die in der Kurve vorhandenen Signaleinbrüche sind messtechnischer Natur und sind darauf zurückzuführen, dass in gewissen kleinen Geschwindigkeitsabschnitten keine akustisches Signale erfasst wurden. Die Lautstärke steigt mit zunehmender Geschwindigkeit an, wobei auffällt, dass im Geschwindigkeitsbereich zwischen 45 und 70 km/h eine besondere Zunahme W der Lautstärke L gemessen wird, die oberhalb des (etwa) exponentiellen Verlaufs liegt. Diese Zunahme W an Lautstärke beruht auf Wummern bei offenem Schiebedach. Bei Messungen mit geschlossenem Schiebedach ist eine solche Erhöhung der Lautstärke nicht feststellbar. Die Lautstärke-Erhöhung W ist abhängig von der Weite der Schiebedach-Öffnung, so dass die beobachtbare Lautstärkezunahme bei anderer Öffnungsweite in anderen Geschwindigkeitsbereichen liegt.

Die Fig. 2 zeigt eine starke akustische Spektrallinie P bei 16,1 Hz aus der Spektralanalyse des Geräuschspegels bei der zu Fig. 1 gehörenden Anströmgeschwindigkeit G mit 50 km/h. Hier ist also messtechnisch das Wummern als Resonanzerscheinung im niederfrequenten Spektralbereich dokumentiert. Die Spektrallinie bei 16,1 Hz ist stark verbreitert, weil die messtechnische Auflösung (im vorliegenden Fall) klein ist. Mit Erhöhung der Auflösung würde man schmälere Spektrallinien erhalten. Die Lautstärke der Schwingung P bei 16,1 Hz ist extrem groß, wie es nach der Lautstärke-Erhöhung W aus Fig. 1 zu erwarten ist. Für das erfindungsgemäße Verfahren und seine technische Umsetzung ist die Amplitude, jedoch nicht die Breite der Spektrallinie von Bedeutung. Die Schwingungsfrequenz bei 16,1 Hz wurde über schnelle Fast-Fourier-Transformation (FFT) ermittelt. Im vorliegenden Fall wurde die Software Dasylab verwendet, wobei die Darstellung durch eine Auflösung von 4096 Punkten gewonnen wurde.

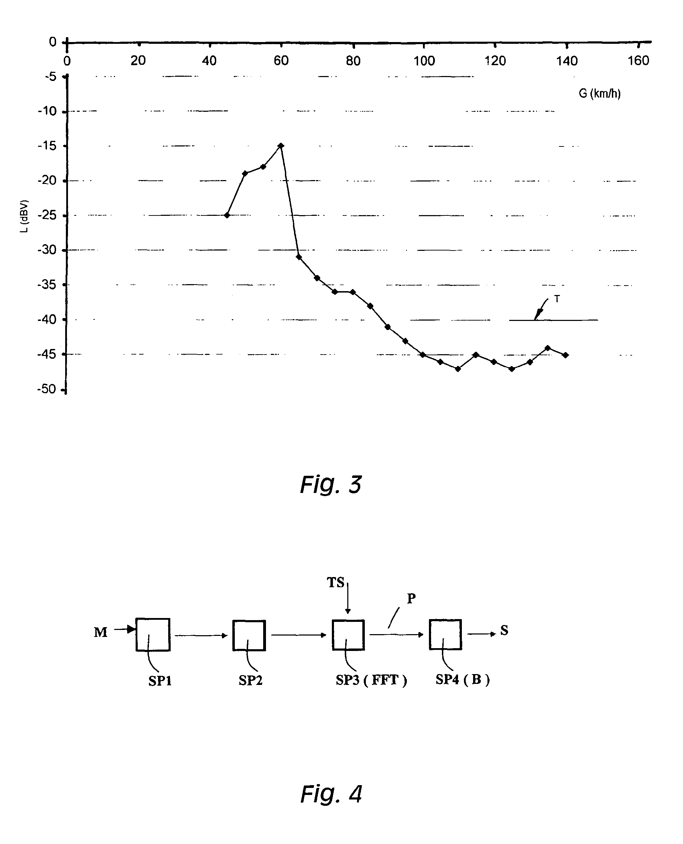

In der Fig. 3 ist die Amplitude einer Resonanzlinie im niederfrequenten Frequenzbereich in Abhängigkeit von der Anströmgeschwindigkeit G dargestellt. Eingezeichnet ist eine Linie bei -40 dBV, die als Maß (Schwelle T) für die Lautstärke genommen wurde, unterhalb welcher die Lautstärke durch Ausgabe eines Ansteuersignals gemäß der Erfindung abgesenkt wird.

Fig. 4 zeigt ein allgemeines Schema der Signalverarbeitungskette des Geräuschspegels M. Das Geräusch M wird von einem - nicht gezeichneten - Mikrofon laufend erfasst und den elektronischen Modulen SP1 bis SP4 zugeführt. Die Signalverarbeitungsmodule SP1 und SP2 stehen stellvertretend für entsprechende elektronische Einheiten, wo SP1 beispielsweise ein Eingangsverstärker sein kann. Das Geräusch M wird im Modul SP2 bandpassgefiltert und im folgenden Modul SP3 der Fast-Fourier-Transformation (FFT) unterworden. Zur Ermittlung des Ausgangssignals S, welches auf einen elektromotorischen Antrieb eines Schiebedaches oder Fensterhebers gegeben wird, werden aus den Spektrallinien nur solche Linien herausgefiltert, die eine Lautstärke haben, die über einer vorgebbaren Schwelle T liegen, beispielsweise stärker als -40 dBV sind (vgl. Fig. 3). In der Regel findet man dann nur eine einzige starke akustische Schwingung, die durch die Anströmung angeregt ist.

Bei Auftreten der starken Schwingungsfrequenz, die auf Wummern zurückzuführen ist, wird über die Fahrzeugelektronik SP4 (oder über einen Automotive-Bus B) ein Elektromotor angesteuert, der die Größe der Fensteröffnung (Schiebedach) verkleinert und/oder die Veränderung der Position (vorzugsweise den Anstellwinkel) des Strömungsleitelements (Windabweiser) vornimmt. Weiterhin eingezeichnet ist ein Signal TS, welches in die Verarbeitungskette eingeführt wird (beispielsweise in eins der Module SP3 oder SP4). Eine solche - auch mit Tachosignal bezeichnete - Größe TS kann ein weiterer Regelparameter sein, beispielsweise die Innenraumtemperatur oder die Fahr- oder Anströmgeschwindigkeit. Das Signal TS bildet - wie schon erwähnt - die Korrelation zu anderen akustischen oder klimatischen Größen. Das Signal TS kann auch aus einem Windgeschwindigkeitsmesser herrühren und bei raumfestem (stationärem) Einsatz der Erfindung verwendet werden.

Unter Einbeziehung des Geschwindigkeitssignals TS wird im Zusammenhang mit dem eingekoppelten Wummersignalanteil eine Hysterese von ± 5 oder 10 km/h um die gemessene Geschwindigkeit mit der Logik erfasst. Liegt das Eingangssignal im Bereich der Hysterese, so wird über die Kommunikationsschnittstelle z.B. dem Schiebedach signalisiert, die vorhandene Ausgangsposition um einige Prozentanteile in Schließrichtung zu verändern, bis keine Resonanz-Frequenz mehr messbar ist.

Bei einer Rückführung einer Stellgröße S für das Stromleitelement und/oder das Schiebedach in die Signalverarbeitung kann auch ein Regelkreis gebildet werden (hier in der Figur nicht dargestellt). Hierbei wird aus dem Fahrzeugzustand und dem akustischen Messwert, repräsentiert durch die störende Grundschwingung (Schwingung mit der größten Amplitude), ein Stellparameter für das Stromleitelement und/oder das Schiebedach zur Ansteuerung der elektromotorischen Antriebe errechnet. Der Stellparameter wird durch einen Vergleich von Ist- und Sollwerten in einem elektronischen Vergleicher dabei so lange verändert, bis die stärkste Resonanzschwingung verschwunden oder unter eine vorgebbare Schwelle gesunken ist. Das Schiebedach öffnet somit wieder, wenn das Wummern nicht mehr messbar ist.

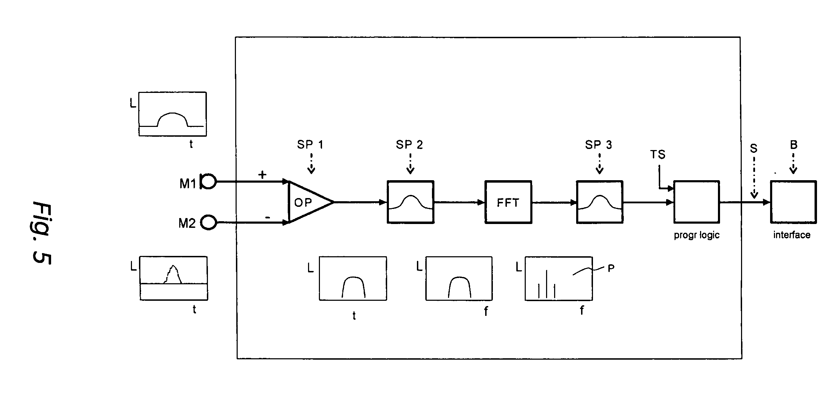

In Fig. 5 ist ausführlicher ein Analysemodul dargestellt, bei dem am Eingang der Verarbeitungskette neben dem Geräuschsignal M1 auch das elektronische Ausgangssignal M2 einer Schallquelle (z.B. von im Fahrzeug vorhandene Lautsprecher) erfasst wird. Das erste Signal wird auf den nicht-invertierenden Eingang, das zweite Signal auf den invertierenden Eingang eines Operationsverstärkers (im einfachsten Fall mit Verstärkung 1:1) geschaltet. Mit der Unterdrückung fremder akustischer Signale ist sichergestellt, dass starke Frequenzen von bordseitigen Schallquelle(n) nicht in die Ermittlung der störenden Resonanzschwingung eingehen.

Am Ausgang des Operationsverstärkers liegt der charakteristische Frequenzgang des Fahrgeräusches vor. Der Frequenzgang wird durch einen nachgeschalteten analogen Bandpass reduziert, um die nachfolgende Frequenzanalyse zu beschleunigen. Die Breite des Bandpasses (mit oberer und unterer Frequenz) ist abgestimmt auf eine Analysebandbreite, die von der erwarteten Bandbreite der Wummereffekte abhängt. Vorzugsweise wird die Bandbreite der Wummereffekte bei einem Fahrzeug einmal ausgemessen und fest in der Verarbeitungskette programmiert. So kann beispielsweise die Analysebandbreite im Tiefpassbereich auf Frequenzen kleiner 100 Hz (als obere Frequenz und 10 Hz als untere Frequnz), bei bestimmten Fahrzeugen sogar auf Frequenzen kleiner 50 Hz (als obere Frequenz) fest eingestellt werden, so dass die Spektralanalyse nur für diese Frequenzen vorgenommen wird. Soll bei Fahrzeugen vermieden werden, dass Pfeifgeräusche durch nur schmal geöffnete Fenster auftreten, kann die Analysebandbreite auch auf ein zweites im höheren Frequenzbereich (beispielsweise zwischen 1000 und 1600 Hz) liegendes Band eingestellt sein.

Im allgemeinen Fall, bei dem bestimmte schmalbandige Frequenzbereiche nicht von vornherein festgelegt sind, wird der analoge Bandpass mit vorbestimmter Breite (etwa zwischen unterer und oberer Frequenz gleich 50 Hz) über den gesamten akustischen Lautstärkebereich durchgestimmt (sogenanntes Tracking-Verfahren). Der Lautstärkebereich kann nach oben bei einigen 1000 Hz begrenzt sein, weil hohe und höchste Stör-Frequenzen bei Räumen in der Größe von Fahrzeugkabinen durch äußere Anströmung nicht auftreten oder extrem selten sind. Wie erwähnt, ist eine Fahrzeugkabine physikalisch als Helmholtz-Resonator zu betrachten, bei dem sich - mit der Größe zunehmend - die Resonanzfrequenz zu niederfrequenter Störung (Wummern) verschiebt.

Die aus der Spektralanalyse gewonnenen Signale (Resonanz- oder Wummer-Frequenzen) mit einer ausreichenden Signalamplitude werden - wie schon zu Fig. 4 beschrieben - weiterverarbeitet.

### Bezugszeichen

- B: Automotive-Bus
- f: Frequenz
- FFT: Fast-Fourier-Transformation
- G: Fahr- oder Anströmgeschwindigkeit
- M: Geräusch-Signal (Frequenzgang)
- M1: Geräusch-Signal (akustisch)
- M2: Musiksignal (elektrisch)
- L: Lautstärke
- S: Ansteuerung Windabweiser/Schiebedach
- SP1 ... SP4: Signal-Prozessoren
- T: Schwelle
- TS: Tachosignal
- W: "Wummern"

## Patentansprüche

1. Verfahren zur Störgeräuschminderung an mindestens einer einer aerodynamischen Anströmung ausgesetzten Öffnung, die mit mindestens einem Verschlusselement und/oder mit mindestens einem bewegbaren Strömungsleitelement ausgestattet ist, wobei Geräusche (M1) erfasst werden, insbesondere von einer Anströmung erzeugte Schwingungen, und das Verschlusselement und/oder das Strömungsleitelement mit der Tendenz angesteuert wird, erzeugte Schwingungen, die Teil der erfassten Geräusche sind, durch Betätigung des Verschlusselements und/oder des Strömungsleitelements unter eine vorgebbare Lautstärkeschwelle (T) abzusenken, wobei die erfassten Geräusche (M1) einer Spektralanalyse (FFT) in einem Frequenzbereich mit vorgegebener Frequenzbandbreite unterworfen werden, wobei die Spektrallinie mit der größten Amplitude innerhalb der Frequenzbandbreite ermittelt wird, wobei ein Ansteuersignal (S) für die Betätigung des Verschlusselements und/oder des Strömungsleitelements ausgegeben wird, falls die Amplitude der ermittelten Spektrallinie (P) oberhalb der vorgebbaren Lautstärkeschwelle (T) liegt.

2. Verfahren nach Anspruch 1, **dadurch gekennzeichnet, dass** die Frequenzbandbreite während der Spektralanalyse (FFT) in einem Frequenzbereich unterhalb von 100 Hz liegt.

3. Verfahren nach einem der vorhergehenden Ansprüche, **dadurch gekennzeichnet, dass** die Spektralanalyse mittels Fast-Fourier-Transformation (FFT) vorgenommen wird.

4. Verfahren nach einem der vorhergehenden Ansprüche, **dadurch gekennzeichnet, dass** das erfasste Geräusch (M1) und die elektronischen Ausgangssignale anderer Geräuschquellen (M2) einer Auswerteschaltung (SP1 ... SP4) zugeführt werden, die eine Trennung der beiden Geräusche vornimmt, so dass allein der Teil der erfassten Geräusche (M1) ohne Signale der anderen Geräuschquellen (M2) der Spektralanalyse (FFT) unterworfen werden.

5. Verfahren nach einem der vorhergehenden Ansprüche, **dadurch gekennzeichnet, dass** ein von der Stellung des Verschlusselements und/oder des Strömungsleitelements abgeleitetes Signal zu derjenigen Vorrichtung rückgeführt wird, die das Steuersignal erzeugt, so dass ein Regelkreis entsteht.

6. Verfahren nach einem der vorhergehenden Ansprüche, **dadurch gekennzeichnet, dass** das Ansteuersignal (S) in eine Anzeige umgesetzt wird.

7. Verfahren nach einem der vorhergehenden Ansprüche, **dadurch gekennzeichnet, dass** das Verfahren in einem Landfahrzeug eingesetzt ist, bei dem das Verschlusselement als Schiebedach oder Fensterheber und/oder das Strömungsleitelement als Windabweiser oder Spoiler an einem Fenster ausgebildet ist.

8. Anordnung zur Durchführung eines Verfahrens nach einem der vorgenannten Ansprüche, **dadurch gekennzeichnet, dass** zur Erfassung der Geräusche (M) ein Drucksensor vorhanden ist, dessen Ausgangssignal einer elektronischen Verarbeitungskette (SP1 ... SP4) zugeführt wird, in der der Frequenzgang (W) der erfassten Geräusche (M) einer Spektralanalyse mit vorgegebener Frequenzbandbreite unterworfen wird und bei der ein Ansteuersignal (S) für die Betätigung mindestens eines Verschlusselements und/oder mindestens eines Strömungsleitelements ausgebbar ist, wenn die Amplitude derjenigen Spektrallinie (P), die innerhalb der Frequenzbandbreite die größte Amplitude hat, über einer vorgebbaren Schwelle liegt.

9. Anordnung nach Anspruch 8, **dadurch gekennzeichnet, dass** zur Spektralanalyse des Frequenzgangs (W) ein programmierbares Elektronikmodul (SP3) eingesetzt wird, das unter anderem eine Fast-Fourier-Transformation (FFT) umfasst.

10. Anordnung nach einem der Ansprüche 8 oder 9, **dadurch gekennzeichnet, dass** das Ansteuersignal (S) über einen elektronischen Bus (B) ausgegeben wird.

11. Anordnung nach einem der Ansprüche 8 bis 10, **dadurch gekennzeichnet, dass** ein Signal (TS) in eine programmierbare Logikeinheit (SP4) einführbar ist, welches mindestens eine Fahrzeugzustandsgröße abbildet und von der programmierbaren Logikeinheit (SP4) in Korrelation zu der mindestens einen über der vorgebbaren Schwelle liegenden Spektrallinie (P) gesetzt wird und das Ansteuersignal (S) beeinflusst.

12. Anordnung nach einem der Ansprüche 8 bis 11, **dadurch gekennzeichnet, dass** der Eingang der elektronischen Verarbeitungskette (SP1 ... SP4) als Subtrahierer (SP1) ausgebildet ist, auf dessen ersten Eingang das Ausgangssignal (M1) des Drucksensors und auf dessen zweiten Eingang ein elektronisches Ausgangssignal (M2) einer hinter der Anströmöffnung vorhandenen Schallquelle geführt ist und das letztgenannte Ausgangssignal (M2) vom Ausgangssignal (M1) des Drucksensors subtrahiert wird.

13. Anordnung nach einem der Ansprüche 8 bis 12, **dadurch gekennzeichnet, dass** eine Anzeige vorhanden ist, über die dem Benutzer mit Hilfe des Ansteuersignals (S) mitgeteilt wird, dass die Amplitude der amplitudenstärksten Spektrallinie über der vorgebbaren Schwelle liegt.
